# EUROPEAN PATENT APPLICATION

(11) **EP 2 869 184 A1**
(43) Date of publication of application: **06.05.2015**
(21) Application number: 14186169.0
(22) Date of filing: 24.09.2014
(51) Int. Cl.: G06F 3/06, G06F 12/02

(54) **Information processing apparatus, data transfer control method, and data transfer control program**

(30) Priority: 31.10.2013 JP 2013227712
(71) Applicant: FUJITSU LIMITED, Kawasaki-shi, Kanagawa 211-8588 (JP)
(72) Inventor: Higeta, Masanori, Kanagawa, 211-8588 (JP); Hayasaka, Kazumi, Kanagawa, 211-8588 (JP)
(74) Representative: Hoffmann Eitle

(57) **Abstract**

An address translation table (18) stores therein an association relation between a logical address and a physical address, change information indicating a change in the association relation when the association relation is changed such that a physical address having been associated with each logical address is associated with a different logical address, and the different logical address. A table control unit (14), when receiving a command to move data between logical addresses from a CPU, changes the association relation in the address translation table (18) such that a movement-destination logical address is associated with a physical address in which the data is stored, sets change information in a movement-source logical address, and stores the movement-destination logical address as a different logical address associated with the movement-source logical address.

## Description

### FIELD

The embodiments discussed herein are related to an information processing apparatus, a data transfer control method, and a data transfer control program.

### BACKGROUND

In recent years, as data processing apparatuses, systems using non-volatile memories have been widespread. The non-volatile memories include, for example, NAND flash memory devices (hereinafter, referred to as "NAND devices") or the like. The NAND devices have advantages in that the operation speeds are higher than those of conventional magnetic disks or the like and the capacities can easily be increased as compared to other non-volatile memories. Therefore, the NAND devices are used as memory systems or storage systems in various fields.

Incidentally, the NAND devices write and read data and move data due to update in units of a physical page that is a data storage area, and delete data in units of a physical block that contains multiple physical pages. Therefore, the NAND devices may include a physical block in which valid data and invalid data are mixed. Further, in the NAND devices, elements deteriorate when data is deleted; therefore, an element deterioration speed varies between a physical page in which frequently updated data is written and a physical page in which less frequently updated data is written.

Therefore, there is a known NAND controller that sorts out data or equalizes deterioration by moving data written in each physical block in accordance with a data written state or a data written time in each physical block. For example, the NAND controller includes a management information table, in which information indicating whether data in each physical page is valid and information indicating a write time of latest data are stored for each physical block.

The NAND controller refers to the management information table and determines whether to move data for each physical block according to the number of pieces of valid data or an elapsed time since writing of the data. Thereafter, when deciding to move data, the NAND controller moves valid data written in a physical block to a physical page of a spare block and deletes data in the selected physical block in order to secure a new spare block and equalize deterioration.

Further, the NAND controller includes an address translation table for translating a logical address that is used to designate data by a system executed by the information processing apparatus into a physical address that indicates a physical page storing data. Then, when moving data, the NAND controller updates the address translation table by using physical addresses indicating a data movement source and a data movement destination.

Furthermore, a conventional technique has been proposed that, to reduce the number of accesses to non-volatile memories, replaces an association between a logical address and a physical address when data is replaced between logical addresses.
Patent Document 1: Japanese Laid-open Patent Publication No. 2005-202942
Patent Document 2: Japanese Laid-open Patent Publication No. 2006-40264

However, if a logical address associated with a physical address in the address translation table is rewritten, the logical address associated with the physical address is changed during operations of the system. Consequently, an association between the physical address and the logical address after the change becomes inconsistent with information stored at the physical address. In this case, malfunction of the system may occur.

To prevent such malfunction of the system, it may be possible to take countermeasures by providing a table for reversely translating addresses in order to perform a full search on the address translation table. However, in this case, the performance or the resource use efficiency of the system may be reduced.

Accordingly, it is an object in one aspect of an embodiment of the invention to provide an information processing apparatus, a data transfer control method, and a data transfer control program that maintain the performance and the resource use efficiency and ensure the reliability of the system.

### SUMMARY

According to an aspect of an embodiment, an information processing apparatus includes: a data storage unit that manages stored data by a physical address; a processing unit that outputs a command to process the data stored in the data storage unit by using a logical address associated with the physical address; a relation storage unit that stores therein an association relation between the logical address and the physical address, change information indicating a change in the association relation when the association relation is changed such that a physical address having been associated with each logical address is associated with a different logical address, and the different logical address; and an address control unit that, when receiving a command to move data between logical addresses from the processing unit, changes the association relation in the relation storage unit so as to associate a movement-destination logical address with a physical address in which the data is stored, sets the change information in a movement-source logical address, and stores the movement-destination logical address as the different logical address associated with the movement-source logical address.

### BRIEF DESCRIPTION OF DRAWINGS

FIG. 1 is a schematic configuration diagram of an information processing apparatus;
FIG. 2 is a diagram for explaining an example of memory access;
FIG. 3 is a diagram illustrating an example of a structure of physical data;
FIG. 4 is a block diagram of a NAND controller according to the first embodiment;
FIG. 5 is a diagram of an example of an address translation table according to the first embodiment;
FIG. 6 is a diagram of an example of a management information table according to the first embodiment;
FIG. 7 is a diagram for explaining an example of a process performed by the NAND controller according to the first embodiment;
FIG. 8 is a diagram for explaining an example of memory access in a high-speed data movement and a data reallocation process;
FIG. 9 is a flowchart of a data read process by an information processing apparatus according to the first embodiment;
FIG. 10 is a flowchart of a data write process by the information processing apparatus according to the first embodiment;
FIG. 11 is a flowchart of a high-speed data movement process by the information processing apparatus according to the first embodiment;
FIG. 12 is a flowchart of a reallocation process by the information processing apparatus according to the first embodiment; and
FIG. 13 is a block diagram of an information processing apparatus according to a second embodiment.

### DESCRIPTION OF EMBODIMENTS

Preferred embodiments of the present invention will be explained with reference to accompanying drawings. The information processing apparatus, the data transfer control method, and the data transfer control program disclosed in this specification will not be limited by the embodiments below.

### [a] First Embodiment

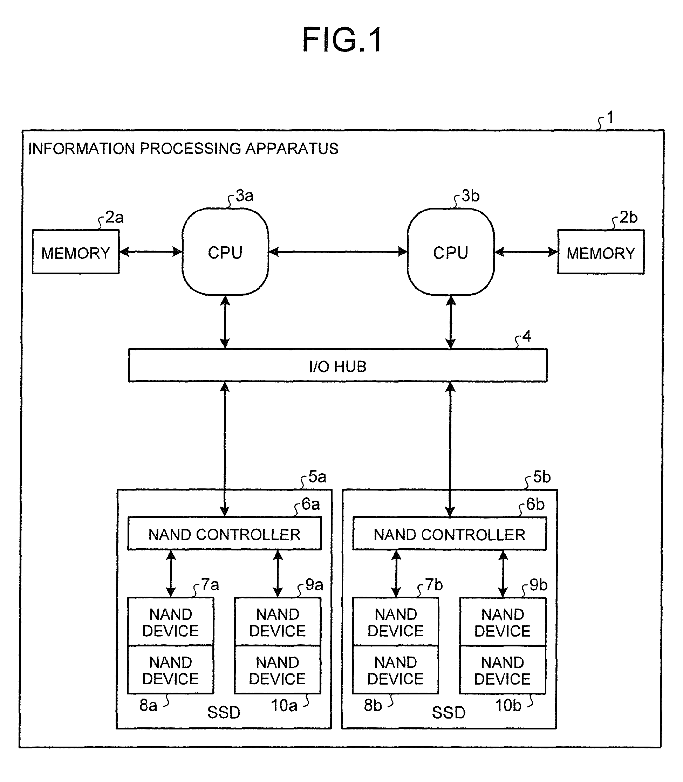

FIG. 1 is a schematic configuration diagram of an information processing apparatus. An information processing apparatus 1 includes multiple memories 2a and 2b, multiple central processing units (CPUs) 3a and 3b, an input output (I/O) hub 4, and multiple solid state drives (SSDs) 5a and 5b. The SSD 5a includes a NAND controller 6a and multiple NAND devices 7a to 10a. The NAND devices 7a to 10a are examples of a "data storage unit".

Further, the SSD 5b includes a NAND controller 6b and multiple NAND devices 7b to 10b. In the description below, the SSD 5b, the NAND controller 6b, and the multiple NAND devices 7b to 10b implement the same functions as those of the SSD 5a, the NAND controller 6a, and the multiple NAND devices 7a to 10a, respectively, and explanation thereof will be omitted.

The memories 2a and 2b are storage devices that store therein data used for arithmetic processing by the CPUs 3a and 3b, respectively. The CPUs 3a and 3b are arithmetic processing devices that perform various types of arithmetic processing by using data stored in the memories 2a and 2, respectively. For example, by using a non-uniform memory access (NUMA) technique, the CPUs 3a and 3b acquire data stored in the memories 2a and 2b and perform arithmetic processing by using the acquired data.

Further, the CPUs 3a and 3b acquire data stored in the SSDs 5a and 5b, respectively, via the I/O hub 4, and perform arithmetic processing by using the acquired data. Specifically, the CPU 3a issues a data read request or data write request to the SSD 5a, and reads or writes data from or to each of the NAND devices 7a to 10a. For example, the CPU 3a issues, to the SSD 5a, a read request containing a logical address designating data to be read. Further, the CPU 3a issues a write request, which contains a logical address designating a destination to which data is to be written and the data to be written. The CPUs 3a and 3b are examples of a "processing unit". The data read request, the data write request, and a high-speed data movement request to be described later are examples of a "processing command".

The NAND device 7a is a non-volatile memory that stores therein various types of data. Specifically, the NAND device 7a includes multiple physical pages serving as data storage areas, and writes data in units of a physical page. Further, the NAND device 7a includes multiple physical blocks with multiple physical pages, and deletes data in units of a block. Meanwhile, a single physical page has a storage capacity of 8 kilobytes for example, and a single physical block has 128 physical pages for example.

The NAND controller 6a accesses each of the NAND devices 7a to 10a and reads or writes data. For example, the NAND controller 6a includes an address translation table, in which a logical address, which is used when each of the CPUs 3a and 3b designates a storage area storing data, and a physical address, which indicates a storage area storing data in the NAND devices 7a to 10a, are associated with each other.

Upon receiving a logical address together with a read request, the NAND controller 6a identifies a physical address associated with the logical address by using the address translation table, and reads data from a storage area indicated by the identified physical address. Thereafter, the NAND controller 6a sends the read data to the CPU 3a via the I/O hub 4.

In the explanation below, to facilitate understanding, a logical address serving as an initial address of each physical page is simply described as a logical address, and a physical address serving as an initial address of each physical page is simply described as a physical address. Further, a system executed by the information processing apparatus 1 issues a read request or a write request to the logical address serving as the initial address of each physical page.

For example, if the NAND devices 7a to 10a have multiple blocks and each of the blocks contains 2^{q} physical pages, the NAND controller 6a performs processes as described below. First, the NAND controller 6a employs the low-order q bits of a logical address as a logical page number for identifying a physical page in a single logical block, and employs the high-order p bits of the remaining logical address as a logical block address indicating the single logical block.

Further, the NAND controller 6a employs the high-order p bits of a physical address as a physical block address indicating a single physical block, and employs the low-order q bits of the physical address as a physical page number for identifying each physical page in the single physical block. That is, the NAND controller 6a divides the logical address into the logical block address, which indicates a logical block, and the logical page number, which indicates a logical page for each logical block. Furthermore, the NAND controller 6a divides the physical address into the physical block address, which indicates a physical block, and the physical page number, which indicates a physical page for each physical block.

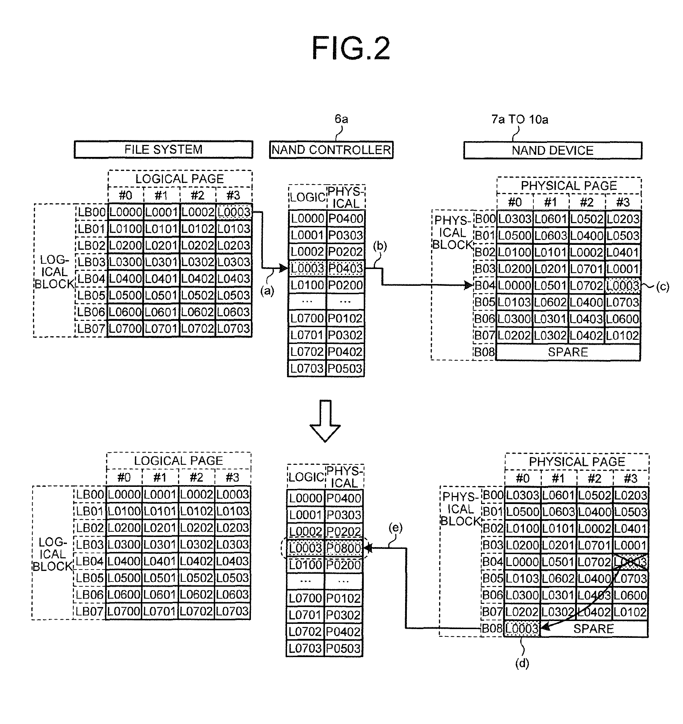

With reference to FIG. 2, an example of memory access performed by the NAND controller 6a will be described below. FIG. 2 is a diagram for explaining an example of the memory access. Incidentally, in the example illustrated in FIG. 2, to facilitate understanding, the NAND device 7a, in which the number of blocks is "9" and the number of physical pages in each of the blocks is "4", is illustrated. Further, in the example illustrated in FIG. 2, a process is illustrated in which the NAND controller 6a writes data in units of physical pages of the NAND devices 7a to 10a by using the address translation table associating a logical block address with a physical block address.

For example, as illustrated in (a) in FIG. 2, the NAND controller 6a issues a write request from a file system executed by the CPU 3a to a logical page number "3" of a logical block address "LB00", that is, to a logical address "L0003". Accordingly, the NAND controller 6a acquires a physical address "P0403" associated with the logical address "L0003" by using the address translation table, and, as illustrated in (b) in FIG. 2, identifies a physical page storing data before update.

Subsequently, as illustrated in (c) in FIG. 2, the NAND controller 6a reads the data in the physical page indicated by the physical address "P0403", updates the read data with write target data, and stores the updated data in a blank physical page of a spare block. For detailed example, as illustrated in (d) in FIG. 2, the NAND controller 6a stores the updated data in a physical page indicated by a physical address "P0800". Thereafter, as illustrated in (e) in FIG. 2, the NAND controller 6a updates the physical address "P0403" associated with the logical address "L0003" with the physical address "P0800", and ends the process.

Incidentally, when data stored in the NAND devices 7a to 10a is written or moved in units of a physical page, in some cases, valid data and invalid data may be mixed in a single physical block. For example, in the example illustrated in FIG. 2, when updating the data indicated by the logical address "L0003", the NAND controller 6a invalidates data in a physical block indicated by a physical block address "B04". Then, the NAND controller 6a stores the updated data in a physical block indicated by a physical block address "B08". Therefore, in the physical block indicated by the physical block address "B04", valid data and invalid data are mixed.

Meanwhile, the NAND devices 7a to 10a are not able to overwrite data in a physical page in which invalid data is stored, and therefore writes data in a spare block from which data has been deleted. However, if physical blocks in which valid data and invalid data are mixed increase, it becomes difficult to secure a spare block for newly writing data. Further, the NAND devices 7a to 10a include elements for storing data. Such elements deteriorate when data is deleted, and if the deterioration progresses, it becomes difficult to appropriately store charges.

Therefore, the NAND controller 6a performs a data reallocation process, such as a garbage collection process of sorting out valid data to secure a new spare block.

Further, when receiving, from the file system executed by the CPU 3a, a command to move data between logical addresses, the NAND controller 6a changes an association relation between a physical address and a logical address in the address translation table. Consequently, the NAND controller 6a realizes the movement of the data between the logical addresses. Specifically, the NAND controller 6a acquires, from the address translation table, a physical address associated with a logical address of a movement source in a movement command. Then, the NAND controller 6a updates the address translation table such that a logical address of a movement destination in the movement command is associated with the acquired physical address. Further, the NAND controller 6a invalidates a physical address that has been associated with the logical address of the movement source. Hereinafter, a data movement between logical addresses due to rewriting of the address translation table by the NAND controller 6a is referred to as a "high-speed data movement". The high-speed data movement is an example of a "data movement between logical addresses".

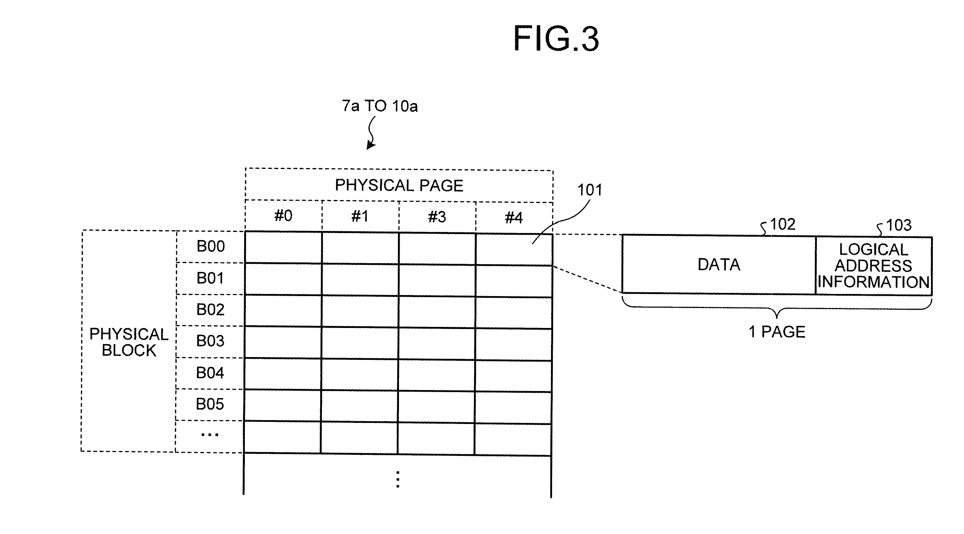

A data storage state in each physical page will be described in detail below. FIG. 3 is a diagram illustrating an example of a structure of physical data.

For example, information 101 stored in a physical page indicated by a physical address "P0003" contains data 102 and logical address information 103 as accompanying information. That is, the NAND controller 6a, when writing the data 102 in the physical page indicated by the physical address "P0003", adds a logical address associated with the physical address "P0003" as the logical address information 103 to the data 102 and performs the writing.

However, when performing a high-speed data movement, the NAND controller 6a rewrites only a address translation table, and does not rewrite the accompanying information on data actually stored in the NAND devices 7a to 10a. Therefore, when the high-speed data movement is performed, an association relation in the address translation table may become inconsistent with an association relation indicated by the accompanying information on the data stored in the NAND controller 6a. In this case, a logical address written as the accompanying information on the data in a certain physical address indicates a wrong address, and therefore, if the NAND controller 6a updates the address translation table by using the accompanying information when performing a data reallocation process, the address translation table may be broken.

To cope with this, the information processing apparatus 1 according to the present embodiment registers, in the address translation table, a change flag indicating that an association relation between a logical address and a physical address has been changed, and registers, as a logical address of a transfer destination, a logical address associated with the changed physical address. Then, when performing the data reallocation process, the information processing apparatus according to the present embodiment confirms whether an association relation of a physical address of a data movement source has been changed by using the address translation table. If the association relation has been changed, the information processing apparatus according to the present embodiment specifies a logical address actually associated with the physical address of the data movement source by using the logical address of the transfer destination, and updates information related to the logical address in the address translation table. Therefore, it becomes possible to prevent the address translation table from being broken without using a table for reversely translating addresses, and easily ensure the reliability of the system while maintaining the system performance and the resource use efficiency.

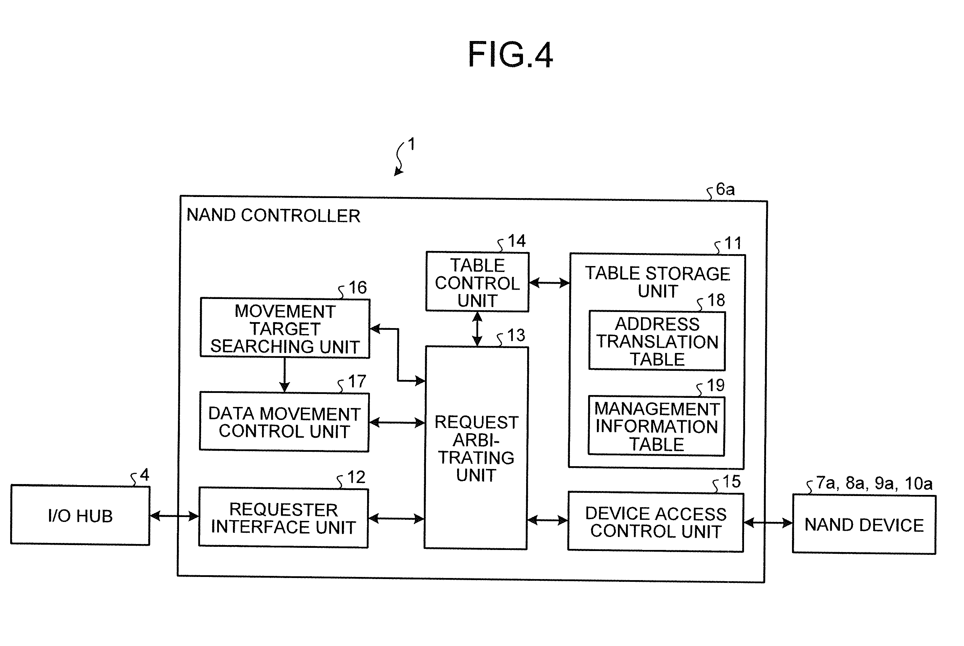

With reference to FIG. 4, the NAND controller 6a will be described below. FIG. 4 is a block diagram of the NAND controller according to the first embodiment. In the example illustrated in FIG. 4, the NAND controller 6a includes a table storage unit 11, a requester interface unit 12, a request arbitrating unit 13, and a table control unit 14. The NAND controller 6a also includes a device access control unit 15, a movement target searching unit 16, and a data movement control unit 17. The table storage unit 11 stores therein an address translation table 18 and a management information table 19.

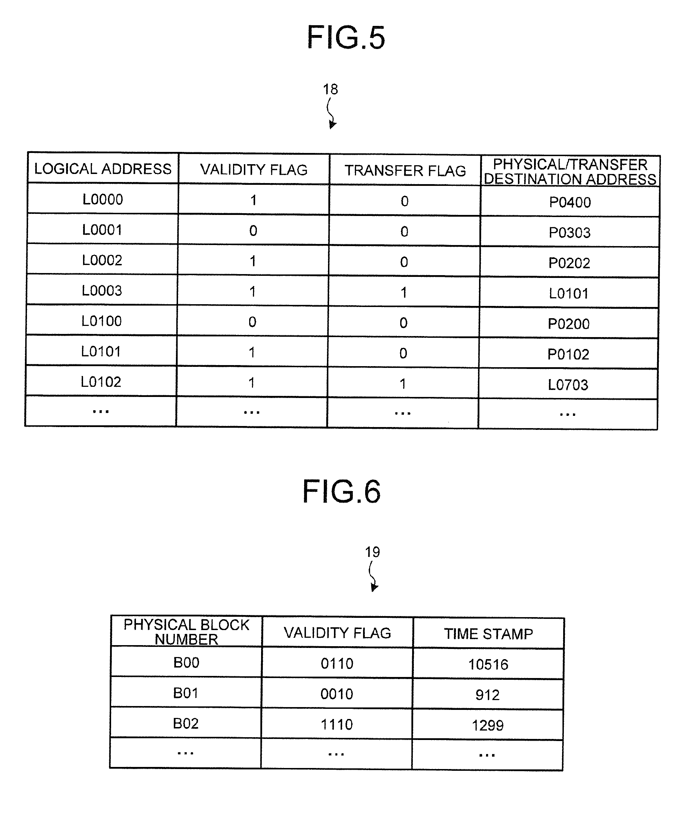

First, with reference to FIG. 5 and FIG. 6, information stored in the address translation table 18 and the management information table 19 that are stored in the table storage unit 11 will be described.

FIG. 5 is a diagram of an example of the address translation table according to the first embodiment. As illustrated in FIG. 5, the address translation table 18 stores therein a logical address, a validity flag, a transfer flag, and a physical/transfer destination address, in an associated manner. In the address translation table 18, each of logical pages is represented by a corresponding logical address.

Meanwhile, the validity flag is a valid bit indicating whether a logical page is being used by software. The transfer flag is information indicating whether an association relation between a logical address and a physical address has been changed. If the transfer flag is set to "0", the association relation of the logical address has not been changed. Further, if the transfer flag is set to "1", the association relation of the logical address has been changed. If a physical address is stored in the physical/transfer destination address, this represents a physical address associated with the logical address. Further, if a logical address is stored in the physical/transfer destination address, this represents a logical address of a movement destination that is associated with the physical address due to a change in the association relation between the logical address and the physical address caused by a high-speed data movement.

For example, in the example illustrated in FIG. 5, the address translation table 18 stores therein a logical address of "L0000", a validity flag of "1", a transfer flag of "0", and a physical address of "P0400" in an associated manner. That is, the address translation table 18 indicates that a logical page represented by the logical address "L0000" is being used, the association relation with the physical address has not been changed, and the physical address "P0400" is associated.

Further, the address translation table 18 stores therein a logical address of "L0003", a validity flag of "1", a transfer flag of "1", and a physical address of "L0101" in an associated manner. That is, the address translation table 18 indicates that a logical page represented by the logical address "L0003" is being used, the association relation with the physical address has been changed, and a movement destination of the physical address that has had the association relation is the logical address "L0101". The address translation table 18 is an example of a "relation storage unit". Further, the transfer flag is an example of "change information".

Next, with reference to FIG. 6, information stored in the management information table 19 will be described. FIG. 6 is a diagram of an example of the management information table according to the first embodiment. As illustrated in FIG. 6, the management information table 19 stores therein a physical block number, a validity flag, and a time stamp in an associated manner. Meanwhile, the validity flag is a bit sequence representing pages that have valid data and that are contained in a physical block. For example, each bit of the validity flag represents whether a physical page contained in a physical block is valid or invalid in sequence from the top. If a bit is "1", a physical page in a position corresponding to this bit is valid, and, if a bit is "0", a single physical page corresponding to this bit is invalid. The time stamp indicates a time at which a physical block with this physical block number began to be used.

For example, in the example illustrated in FIG. 6, the management information table 19 stores therein a physical block number of "B00", a validity flag of "0110", and a time stamp of "10516" in an associated manner. That is, the management information table 19 indicates that two physical pages, which are pages #1 and #2, are valid in a logical block represented by the physical block number "B00". Further, it is indicated that the physical block with the physical block number "B00" began to be used when a value of a time measurement counter inside the NAND controller 6a was 10516.

Referring back to FIG. 4, explanation will be continued. The requester interface unit 12 is an interface for requests from the CPUs 3a and 3b to the NAND devices 7a to 10a. For example, the requester interface unit 12 receives a read request containing a logical address from the CPU 3a or 3b via the I/O hub 4. In this case, the requester interface unit 12 outputs the read request to the request arbitrating unit 13. Upon receiving, from the request arbitrating unit 13, data read from the NAND devices 7a to 10a, the requester interface unit 12 sends the data to the CPU 3a or 3b serving as an issuing source of the read request.

Further, the requester interface unit 12 receives, from the CPUs 3a and 3b, write target data to be written to the NAND devices 7a to 10a and a write request containing a logical address of the write target data. In this case, the requester interface unit 12 outputs the received write request to the request arbitrating unit 13. Upon receiving, from the request arbitrating unit 13, a response indicating completion of writing of the data, the requester interface unit 12 sends the received response to the CPU 3a or 3b serving as an issuing source of the write request.

Furthermore, the requester interface unit 12 receives, from the CPUs 3a and 3b, a high-speed data movement request containing logical addresses of a movement source and a movement destination for the high-speed data movement. In this case, the requester interface unit 12 outputs the received high-speed data movement request to the request arbitrating unit 13. Upon receiving, from the request arbitrating unit 13, a response indicating completion of the high-speed data movement, the requester interface unit 12 sends the received response to the CPU 3a or 3b serving as an issuing source of the high-speed data movement request.

The request arbitrating unit 13 arbitrates various requests issued by the requester interface unit 12, the movement target searching unit 16, and the data movement control unit 17. Specifically, the request arbitrating unit 13 receives a read request, a write request, and a high-speed data movement request from the requester interface unit 12. Further, the request arbitrating unit 13 receives, from the data movement control unit 17, a reallocation request to move data stored in the NAND devices 7a to 10a from a currently-storing physical page to a different physical page. Furthermore, the request arbitrating unit 13 receives, from the data movement control unit 17, a deletion request to delete data in a physical block. Moreover, the request arbitrating unit 13 receives, from the movement target searching unit 16, a table reference request to refer to the management information table 19.

Then, the request arbitrating unit 13 arbitrates the read request, the write request, the high-speed data movement request, the reallocation request, the deletion request, and the table reference request received from the requester interface unit 12, the data movement control unit 17, and the movement target searching unit 16. For example, the request arbitrating unit 13 executes, at the highest priority, the read request, the write request, and the high-speed data movement request issued by the requester interface unit 12 in order to prevent interference with read and write of data performed by the CPUs 3a and 3b with respect to the NAND devices 7a to 10a. Further, for example, the request arbitrating unit 13 executes the reallocation request at a higher priority than the deletion request and the table reference request, and executes the deletion request at a higher priority than the table reference request. Incidentally, a rule under which the request arbitrating unit 13 arbitrates all the requests is not limited to the above described processes, and an arbitrary rule is applicable.

Hereinafter, a series of processes performed by the request arbitrating unit 13 upon reception of a read request, a write request, a high-speed data movement request, a reallocation request, a deletion request, and a table reference request will be described. For example, upon receiving a read request, the request arbitrating unit 13 outputs a logical address contained in the read request to the table control unit 14. Then, upon receiving a physical address to be a read target from the table control unit 14, the request arbitrating unit 13 issues a read request containing the received physical address to the device access control unit 15. Thereafter, upon receiving read target data from the device access control unit 15, the request arbitrating unit 13 outputs the received data to the requester interface unit 12. Further, upon receiving a notice of an access error as a response from the table control unit 14, the request arbitrating unit 13 sends the notice of the access error to the CPU 3a or 3b serving as a transmission source of the read request.

Furthermore, upon receiving a write request, the request arbitrating unit 13 outputs a logical address contained in the write request to the table control unit 14. Consequently, if write target data is new data, the request arbitrating unit 13 receives, from the table control unit 14, a physical address of a page that serves as a data writing destination among spare blocks in which no data is stored.

Thereafter, the request arbitrating unit 13 issues a write request, which contains the physical address received from the table control unit 14 and contains the write target data, to the device access control unit 15. Further, upon receiving, from the device access control unit 15, a response indicating completion of writing of the data, the request arbitrating unit 13 outputs a table update request, which contains the physical address of the physical page serving as the data writing destination and contains the logical address contained in the write request, to the table control unit 14. Then, upon receiving a response indicating completion of update of the table from the table control unit 14, the request arbitrating unit 13 outputs, to the requester interface unit 12, a response to the write request.

Further, if the purpose of writing is to update data, the request arbitrating unit 13 receives a physical address of a page storing update-source data, as an update-source physical address, from the table control unit 14. Furthermore, the request arbitrating unit 13 receives a physical address of a page contained in a spare block, that is, a physical address of a page serving as the data writing destination, as an update-destination physical address, from the table control unit 14.

Then, upon receiving the update-source physical address and the update-destination physical address from the table control unit 14, the request arbitrating unit 13 issues an update request to request update of data to the device access control unit 15. Specifically, the request arbitrating unit 13 issues an update request containing the update-source physical address, the update-destination physical address, and write target data to the device access control unit 15.

Thereafter, upon receiving a response indicating completion of writing of the data from the device access control unit 15, the request arbitrating unit 13 outputs a table update request containing the update-source physical address, the update-destination physical address, and the logical address contained in the write request to the table control unit 14. Thereafter, upon receiving a response to the table update request from the table control unit 14, the request arbitrating unit 13 outputs a response indicating completion of writing of the data to the requester interface unit 12.

Further, upon receiving a high-speed data movement request, the request arbitrating unit 13 outputs a movement-source logical address and a movement-destination logical address, which are contained in the high-speed data movement request, to the table control unit 14. Then, upon receiving a response indicating completion of update of the table from the table control unit 14, the request arbitrating unit 13 outputs, to the requester interface unit 12, a response to the high-speed data movement request. Furthermore, upon receiving a notice of an access error as a response from the table control unit 14, the request arbitrating unit 13 sends the notice of the access error to the CPU 3a or 3b serving as a transmission source of the high-speed data movement request.

Moreover, the request arbitrating unit 13 receives, from the data movement control unit 17, a reallocation request containing a movement-source physical address that is a physical address of a physical page storing data to be moved. Subsequently, the request arbitrating unit 13 sends a query or the like to the table control unit 14, and acquires, as a movement-destination physical address, a physical address of a physical page serving as a data movement destination.

Then, the request arbitrating unit 13 issues a reallocation request containing the movement-source physical address to the device access control unit 15. Thereafter, the request arbitrating unit 13 receives movement target data read from the NAND devices 7a to 10a and accompanying logical address information from the device access control unit 15, and stores them. Then, the request arbitrating unit 13 outputs a table update request, which contains the movement-destination physical address and the movement-source physical address received from the data movement control unit 17 and contains a logical address accompanying the movement target data received from the device access control unit 15, to the table control unit 14. Thereafter, upon receiving a response to the table update request containing the logical address information corresponding to the movement target data from the table control unit 14, the request arbitrating unit 13 issues a write request, which contains the data that has been read and stored, the movement-destination physical address, and the logical address corresponding to the movement target data, to the device access control unit 15. Then, upon receiving a response indicating completion of writing of the data from the device access control unit 15, the request arbitrating unit 13 outputs a table update request, which contains the movement-destination physical address and the movement-source physical address received from the data movement control unit 17, to the table control unit 14. Thereafter, upon receiving a response to the table update request from the table control unit 14, the request arbitrating unit 13 outputs a response indicating completion of movement of the data to the data movement control unit 17.

Further, the request arbitrating unit 13 receives, from the data movement control unit 17, a deletion request containing a physical block address indicating a physical block to be a data deletion target. Upon receiving the deletion request, the request arbitrating unit 13 issues the received deletion request to the device access control unit 15. Then, upon receiving a response indicating completion of deletion of the data from the device access control unit 15, the request arbitrating unit 13 outputs a table update request containing the physical block address that has been stored in the deletion request to the table control unit 14. Then, upon receiving a response indicating completion of update of the data from the table control unit 14, the request arbitrating unit 13 outputs a response indicating completion of deletion of the data to the data movement control unit 17.

Furthermore, upon receiving a table reference request from the movement target searching unit 16, the request arbitrating unit 13 transmits a reference request to refer to the management information table 19 to the table control unit 14. Then, upon receiving the management information table 19 from the table control unit 14, the request arbitrating unit 13 sends the received management information table 19 to the movement target searching unit 16.

The table control unit 14 translates a logical address into a physical address. For example, upon receiving a logical address stored in a read request from the request arbitrating unit 13, the table control unit 14 refers to the address translation table 18 and acquires a value of the validity flag corresponding to the received logical address.

If the validity flag is "0", the logical address is invalid; therefore the table control unit 14 outputs an access error, as a response to the read request, to the request arbitrating unit 13. On the contrary, if the validity flag is "1", the table control unit 14 acquires a value of the transfer flag.

If the transfer flag is "1", an association relation between the logical address and the physical address has been changed; therefore, the table control unit 14 outputs an access error, as a response to the read request, to the request arbitrating unit 13. On the contrary, if the transfer flag is "0", the table control unit 14 acquires a physical address associated with the received logical address from the address translation table 18. Then, the table control unit 14 outputs the acquired physical address to the request arbitrating unit 13.

Further, upon receiving a logical address stored in a write request from the request arbitrating unit 13, the table control unit 14 refers to the address translation table 18 and acquires a value of the validity flag of the received logical address.

If the validity flag is "0", the logical address has not been used; therefore, a write process as described below is performed.

First, the table control unit 14 refers to the management information table 19, and identifies a physical block storing no data, that is, a spare block. For example, the table control unit 14 refers to the management information table 19, searches for a physical block for which all of the numbers of associated valid pages are "0", and employs the detected physical block as a spare block. Then, the table control unit 14 outputs a physical address of a physical page contained in the spare block to the request arbitrating unit 13. Further, the table control unit 14 sets the validity flag of the received logical address in the address translation table 18 to "1". Furthermore, the table control unit 14 sets the transfer flag of the received logical address in the address translation table 18 to "0". Moreover, the table control unit 14 registers the physical address that has been output to the request arbitrating unit 13 in a physical/transfer destination address of the received logical address in the address translation table 18.

Incidentally, once the table control unit 14 identifies a spare block, it outputs a physical address of a physical page contained in the same spare block in the write process until data is written in all of physical pages contained in the identified spare block. Specifically, the table control unit 14 outputs a physical address of a physical page in which no data is written among the physical pages contained in the spare block, in numerical order of the physical page number. Then, if data is written in all of the physical pages contained in the spare block, the table control unit 14 refers to the management information table 19 and identifies a new spare block.

On the contrary, if the validity flag of "1" is associated with the received logical address, the table control unit 14 acquires a value of the transfer flag.

If the transfer flag is "1", because a physical address associated with the logical address has not been set, the table control unit 14 performs the above-described write process.

On the contrary, if the transfer flag is "0", the purpose of the write request is to update data. Therefore, the table control unit 14 outputs, as an update-source physical address, a physical address associated with the received logical address to the request arbitrating unit 13. Thereafter, the table control unit 14 identifies a spare block, and outputs, as an update-destination physical address, a physical address of a physical page storing no data among physical pages contained in the identified spare block to the request arbitrating unit 13. Further, the table control unit 14 sets the validity flag of the received logical address in the address translation table 18 to "1". Furthermore, the table control unit 14 sets the transfer flag of the received logical address in the address translation table 18 to "0". Moreover, the table control unit 14 registers the update-destination physical address, which has been output to the request arbitrating unit 13, in the physical/transfer destination address of the received logical address in the address translation table 18.

Furthermore, upon receiving logical addresses of a movement source and a movement destination stored in a high-speed data movement request, the table control unit 14 performs a process on the address translation table 18 as described below. First, the table control unit 14 acquires a value of the validity flag of a movement-source logical address.

If the validity flag is "0", the logical address is not being used; therefore, the table control unit 14 outputs an access error to the request arbitrating unit 13. On the contrary, if the validity flag is "1", the table control unit 14 acquires a value of the transfer flag of the movement-source logical address.

If the transfer flag is "1", data at the movement-source logical address has already been moved; therefore, the table control unit 14 outputs an access error to the request arbitrating unit 13.

On the contrary, if the transfer flag is "0", the table control unit 14 sets the transfer flag of the movement-source logical address to "1". Further, the table control unit 14 registers a movement-destination logical address in the physical/transfer destination address of the movement-source logical address. Furthermore, the table control unit 14 sets the validity flag of the movement-destination logical address to "1". Moreover, the table control unit 14 sets the transfer flag of the movement-destination logical address to "0". Furthermore, the table control unit 14 registers the physical address, which has been associated with the movement-source logical address, in the physical/transfer destination address of the movement-destination logical address. Thereafter, the table control unit 14 outputs, to the request arbitrating unit 13, a response indicating completion of movement of the data as a response to the high-speed data movement request.

Furthermore, when the request arbitrating unit 13 receives a reallocation request, the table control unit 14 receives a query about a movement-destination physical address from the request arbitrating unit 13. In this case, the table control unit 14 identifies a spare block, and outputs, as the movement-destination physical address, a physical address of a physical page storing no data among physical pages contained in the identified spare block to the request arbitrating unit 13.

Thereafter, the table control unit 14 receives, from the request arbitrating unit 13, input of information on a logical address accompanying the data being moved from the request arbitrating unit 13. Subsequently, the table control unit 14 acquires a value of the transfer flag of the received logical address from the address translation table 18. If the value of the transfer flag is "1", the table control unit 14 acquires a logical address stored in the physical/transfer destination address corresponding to the received logical address. Then, the table control unit 14 acquires a value of the transfer flag of the acquired logical address. The table control unit 14 repeats this process until a logical address with the transfer flag of "0" is obtained.

On the contrary, if the transfer flag is "0", the table control unit 14 updates the physical/transfer destination address corresponding to the logical address with the movement-destination physical address. Further, the table control unit 14 outputs the logical address to the request arbitrating unit 13.

Incidentally, upon receiving, from the system executed by the information processing apparatus 1 for example, an instruction to dissolve an association between a logical address and data, the table control unit 14 updates a validity flag associated with a target logical address in the address translation table 18 to "0".

Further, the table control unit 14 updates the management information table 19 according to writing of data, a high-speed data movement, or reallocation. For example, if data is written, the table control unit 14 sets a validity flag corresponding to a physical page in which the data is written to "1". Furthermore, if a high-speed data movement is performed, the table control unit 14 sets a validity flag corresponding to a physical page associated with a logical page serving as a movement destination to "0". Moreover, if reallocation is performed, the table control unit 14 sets a validity flag corresponding to a physical page serving as a movement source to "0", and sets a validity flag corresponding to a physical page serving as a movement destination to "1".

Furthermore, upon receiving the table reference request, the table control unit 14 acquires the management information table 19 from the table storage unit 11. Then, the table control unit 14 outputs the acquired management information table 19 to the request arbitrating unit 13. The table control unit 14 is an example of an "address control unit".

The device access control unit 15 performs device accesses to the NAND devices 7a to 10a according to various requests from the request arbitrating unit 13. For example, the device access control unit 15 receives a read request containing a physical address from the request arbitrating unit 13. In this case, the device access control unit 15 reads data stored in a page indicated by the physical address stored in the read request among pages provided in the NAND devices 7a to 10a. Then, the device access control unit 15 outputs the read data to the request arbitrating unit 13.

Furthermore, for example, the device access control unit 15 receives a write request containing a physical address and write target data from the request arbitrating unit 13. In this case, the device access control unit 15 stores the write target data in a physical page indicated by the physical address contained in the write request. Thereafter, the device access control unit 15 outputs a response indicating completion of writing of the data to the request arbitrating unit 13.

Moreover, for example, if the purpose of the write request is to update data, the device access control unit 15 receives an update request containing an update-source physical address, an update-destination physical address, and write target data from the request arbitrating unit 13. In this case, the device access control unit 15 reads data in a physical page indicated by the update-source physical address. Subsequently, the device access control unit 15 updates the read data with the data contained in the update request. Then, the device access control unit 15 stores the updated data in a physical page indicated by the update-destination physical address. Thereafter, the device access control unit 15 outputs a response indicating completion of writing of the data to the request arbitrating unit 13.

Further, the device access control unit 15 receives a reallocation request containing a movement-source physical address and a movement-destination physical address from the request arbitrating unit 13. In this case, the device access control unit 15 reads data from a physical page indicated by the movement-source physical address, and stores the read data in a physical page indicated by the movement-destination physical address. Thereafter, the device access control unit 15 outputs a response indicating completion of movement of the data to the request arbitrating unit 13.

Furthermore, the device access control unit 15 receives, from the request arbitrating unit 13, a deletion request containing a physical block address indicating a physical block to be a data deletion target. In this case, the device access control unit 15 deletes data stored in the physical block indicated by the physical block address contained in the deletion request, and outputs a response indicating completion of deletion of the data to the request arbitrating unit 13.

The movement target searching unit 16 starts a data reallocation process at a predetermined timing. For example, the movement target searching unit 16 starts the data reallocation process at predetermined time intervals, at a predetermined time, or by being triggered by an instruction from an application program executed by the information processing apparatus 1. Hereinafter, the data reallocation process will be described.

The movement target searching unit 16 outputs, to the request arbitrating unit 13, a table reference request to refer to the management information table 19. Thereafter, the movement target searching unit 16 acquires the management information table 19 from the request arbitrating unit 13.

Subsequently, the movement target searching unit 16 sequentially checks valid pages and time stamps in order from a physical block with the smallest number in the management information table 19. The movement target searching unit 16 stores therein a page threshold that is a threshold for a valid page for detecting a movement target, and a time threshold that is a threshold for an elapsed time. When detecting a physical block having a smaller number of remaining valid pages than the page threshold, the movement target searching unit 16 specifies this physical block as a movement target physical block. Further, when detecting a physical block that has not been updated for a longer time than the time threshold, the movement target searching unit 16 also specifies this physical block as the movement target physical block. Then, the movement target searching unit 16 specifies a physical page storing data in the movement target physical block, and notifies the data movement control unit 17 of a physical address indicating the specified physical page.

The data movement control unit 17 receives the physical address of the physical page to be a movement target from the movement target searching unit 16. Then, the data movement control unit 17 outputs, together with the physical address, a reallocation request to move the data stored in the physical page to an unused physical page, to the request arbitrating unit 13. The data reallocation process is an example of a "data movement to store data being stored in a specific physical address to a different physical address".

Incidentally, the requester interface unit 12, the request arbitrating unit 13, the table control unit 14, the device access control unit 15, the movement target searching unit 16, and the data movement control unit 17 are, for example, electronic circuits. As an example of the electronic circuits, an integrated circuit, such as an application specific integrated circuit (ASIC) or a field programmable gate array (FPGA), a central processing unit (CPU), a micro processing unit (MPU) or the like is applied.

Furthermore, the table storage unit 11 is a storage device, such as a semiconductor memory element, examples of which include a random access memory (RAM) and a flash memory.

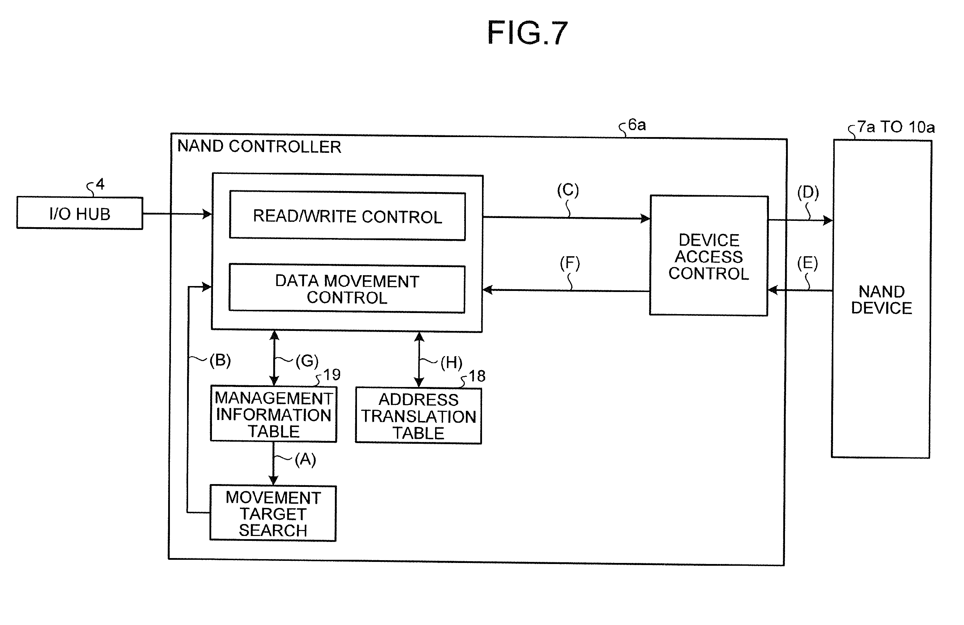

Next, with reference to FIG. 7, processes that the NAND controller 6a according to the present embodiment performs when reallocating data will be described altogether. FIG. 7 is a diagram for explaining a process performed by the NAND controller according to the first embodiment.

For example, as illustrated in (A) in FIG. 7, the NAND controller 6a refers to the management information table 19 and selects a physical block with a smaller number of valid pages than the page threshold or a physical block whose elapsed time since writing is equal to or longer than the time threshold. The NAND controller 6a decides to move data stored in the selected physical block.

Then, when deciding to move the data in the physical block, the NAND controller 6a performs a data reallocation process as illustrated in (B) in FIG. 7. Specifically, the NAND controller 6a specifies, from the management information table 19, a physical page storing the data in the physical block in which the data is moved, and employs a physical address indicating the specified physical page as a movement-source physical address. Further, the NAND controller 6a acquires, as a movement-destination physical address, a physical address of a spare block from the management information table 19. Then, the NAND controller 6a performs the data reallocation process by using the movement-source physical address and the movement-destination physical address.

Specifically, as illustrated in (C) in FIG. 7, the NAND controller 6a controls device access related to the data movement, by using the movement-source physical address and the movement-destination physical address. Consequently, as illustrated in (D) in FIG. 7, the NAND controller 6a moves the data stored in the physical page indicated by the movement-source physical address to a physical page indicated by the movement-destination physical address. Then, as illustrated in (E) and (F) in FIG. 6, the NAND controller 6a receives a response related to the data movement.

Accordingly, as illustrated in (G) in FIG. 7, the NAND controller 6a updates the management information table 19 according to the data movement.

Further, the NAND controller 6a acquires a logical address stored as logical address information accompanying the data. Then, as illustrated in (H) in FIG. 7, the NAND controller 6a checks a transfer flag of the acquired logical address, and if the transfer flag is "1", acquires a transfer destination address and checks a transfer flag of the acquired transfer destination address. When specifying a logical address with the transfer flag of "0", the NAND controller 6a updates the physical address associated with the specified logical address with the movement-destination physical address.

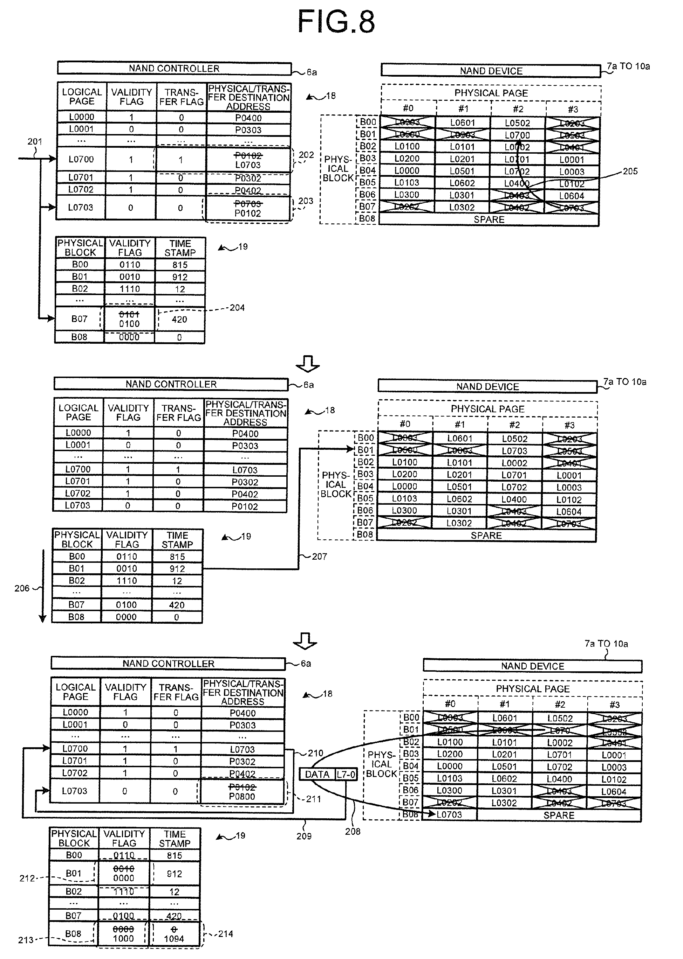

Furthermore, with reference to FIG. 8, data processing performed by the information processing apparatus 1 according to the present embodiment will be described altogether. FIG. 8 is a diagram for explaining an example of memory access in the high-speed data movement and the data reallocation process.

In the example illustrated in FIG. 8, to facilitate understanding, the NAND device 7a, in which the number of blocks is "9" and the number of physical pages in each of the blocks is "4", is illustrated. Further, in the example illustrated in FIG. 8, a case is illustrated in which the NAND controller 6a performs a high-speed data movement and data reallocation in units of physical pages of the NAND devices 7a to 10a by using the address translation table 18.

For example, upon receiving a high-speed data movement request to move data from a logical address "L0700" to a logical address "L0703", the NAND controller 6a performs a table rewrite process 201. In this case, as in an update 203, the NAND controller 6a rewrites a physical/transfer destination address of a movement-destination logical address "L0703" to a physical address "P0102" that has been associated with a movement-source logical address "L0700" in the address translation table 18. Further, as in an update 202, the NAND controller 6a rewrites a physical/transfer destination address of the movement-source logical address "L0700" to "L0703" that is a movement-destination logical address, and sets a transfer flag to "1".

Furthermore, as in an update 204, the NAND controller 6a invalidates a flag of a physical page "P0703" among valid pages of a physical block "B07" in the management information table 19.

In this case, as in an update 205, a physical address associated with the physical page "L0703" is changed from "P0703" to "P0102".

Thereafter, as illustrated in a search 206, the NAND controller 6a searches for a movement target at a predetermined timing. Herein, it is assumed that a physical block "B01" is specified as a movement target physical block. In this case, the NAND controller 6a performs a data reallocation process 207 on a valid physical page "L0703" in the physical block "B01" in the NAND devices 7a to 10a.

Therefore, as in a movement 208, the NAND controller 6a moves data in a physical page "P0102" to a spare physical page "P0800".

At this time, the NAND controller 6a acquires "L0700" from the logical address information that is the accompanying information on the data. Then, as in a process 209, the NAND controller 6a checks a transfer flag of the logical address "L0700" in the address translation table 18. Here, the transfer flag is "1", and therefore, the NAND controller 6a acquires "L0703" that is a transfer destination address. Subsequently, as in a process 210, the NAND controller 6a checks a transfer flag of the logical address "L0703" in the address translation table 18. Then, as in an update 211, when confirming that the transfer flag is "0", the NAND controller 6a changes the physical/transfer destination address of the logical address "L0703" in the address translation table 18 from "P0102" that is a movement source of the reallocation process to "P0800".

Furthermore, as in an update 212, the NAND controller 6a sets a bit corresponding to the physical page "P0102" in the validity flag of the physical block "B01" in the management information table 19 to 0. In this example, as a result of the above, all in the validity flag of the physical block "B01" become 0; therefore, the NAND controller 6a subsequently deletes the physical block "B01". Further, as in an update 213, the NAND controller 6a sets a bit corresponding to the physical page "P0800" in the validity flag of the physical block "B08" to "1". Moreover, as in an update 214, the NAND controller 6a updates a time stamp of the physical block "B08".

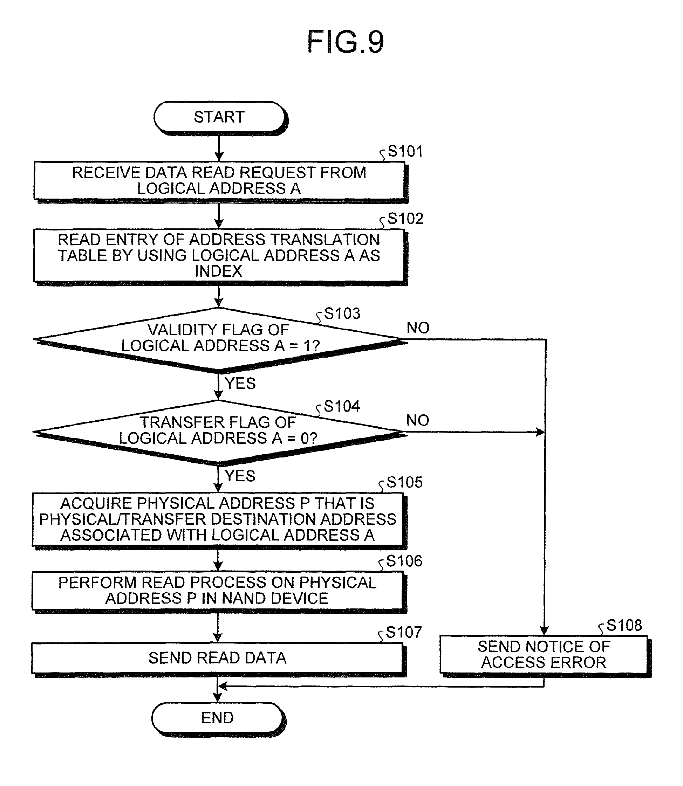

Next, with reference to FIG. 9, a data read process performed by the information processing apparatus 1 according to the present embodiment will be described. FIG. 9 is a flowchart of a data read process by the information processing apparatus according to the first embodiment. Herein, a case will be described in which data is read from a logical address A associated with a physical address P.

The request arbitrating unit 13 receives a request to read data from the logical address A (Step S101). The request arbitrating unit 13 notifies the table control unit 14 of the reading of the data from the logical address A.

The table control unit 14 reads an entry of the address translation table 18 by using the logical address A as an index (Step S102).

Then, the table control unit 14 determines whether a validity flag of the logical address A is "1" (Step S103). If the validity flag is "0" (Step S103: NO), the table control unit 14 notifies the request arbitrating unit 13 of an access error (Step S108). The request arbitrating unit 13 sends a notice of the access error to the CPU 3a or 3b serving as an issuing source of the read request.

On the contrary, if the validity flag is "1" (Step S103: YES), the table control unit 14 determines whether a transfer flag of the logical address A is "0" (Step S104). If the transfer flag is "1" (Step S104: NO), the table control unit 14 notifies the request arbitrating unit 13 of an access error (Step S108). The request arbitrating unit 13 sends a notice of the access error to the CPU 3a or 3b serving as the issuing source of the read request.

On the contrary, if the transfer flag is "0" (Step S104: YES), the table control unit 14 acquires the physical address P that is a physical/transfer destination address associated with the logical address A (Step S105). Then, the table control unit 14 sends the physical address P to the request arbitrating unit 13.

Subsequently, the request arbitrating unit 13 issues a read request containing the physical address P to the device access control unit 15. The device access control unit 15 performs a read process on the physical address P among pages provided in the NAND devices 7a to 10a (Step S106).

The request arbitrating unit 13 sends the data read by the device access control unit 15 to the CPU 3a or 3b serving the issuing source of the read request (Step S107).

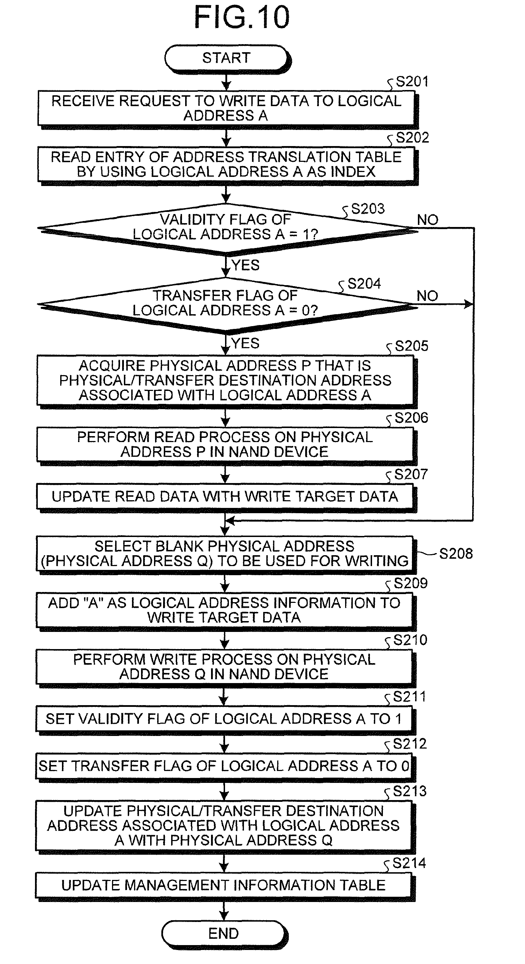

Next, with reference to FIG. 10, a data write process by the information processing apparatus 1 according to the present embodiment will be described. FIG. 10 is a flowchart of the data write process by the information processing apparatus according to the first embodiment. Herein, a case will be described in which data is written to the logical address A. If a physical address has already been associated with the logical address A, this physical address is denoted by P. Further, a physical address for writing is denoted by Q.

The request arbitrating unit 13 receives a request to write data to the logical address A (Step S201). The request arbitrating unit 13 notifies the table control unit 14 of the writing of the data to the logical address A.

The table control unit 14 reads an entry of the address translation table 18 by using the logical address A as an index (Step S202).

Then, the table control unit 14 determines whether a validity flag of the logical address A is "1" (Step S203). If the validity flag is "0" (Step S203: NO), the table control unit 14 proceeds to Step S208.

On the contrary, if the validity flag is "1" (Step S203: YES), the table control unit 14 determines whether a transfer flag of the logical address A is "0" (Step S204). If the transfer flag is "1" (Step S204: NO), the table control unit 14 proceeds to Step S208.

On the contrary, if the transfer flag is "0" (Step S204: YES), the table control unit 14 acquires the physical address P that is a physical/transfer destination address associated with the logical address A (Step S205). Thereafter, the table control unit 14 sends the physical address P to the request arbitrating unit 13.

Subsequently, the request arbitrating unit 13 issues a read request containing the physical address P to the device access control unit 15. The device access control unit 15 performs a read process on the physical address P among pages provided in the NAND devices 7a to 10a (Step S206).

Then, the request arbitrating unit 13 updates the data read by the device access control unit 15 with write target data (Step S207).

The table control unit 14 selects a physical address Q as a blank physical address to be used for writing from the management information table 19 (Step S208). The table control unit 14 notifies the request arbitrating unit 13 of the physical address Q.

Subsequently, the request arbitrating unit 13 adds "A" as logical address information to the write target data (Step S209).

Then, the request arbitrating unit 13 issues a write request containing the physical address Q to the device access control unit 15. The device access control unit 15 performs a write process on the physical address Q among pages provided in the NAND devices 7a to 10a (Step S210).

The table control unit 14 sets the validity flag of the logical address A in the address translation table 18 to "1" (Step S211).

Further, the table control unit 14 resets the transfer flag of the logical address A in the address translation table 18 to "0" (Step S212).

Then, the table control unit 14 updates the physical/transfer destination address of the logical address A in the address translation table 18 with the physical address Q (Step S213).

Further, the table control unit 14 updates the management information table 19 (Step S214).

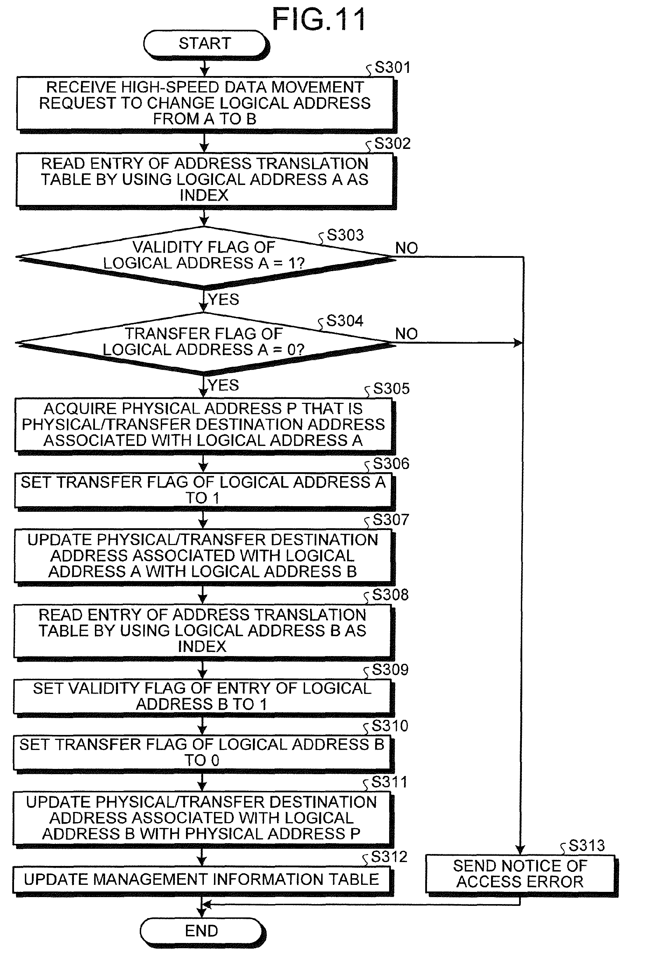

Next, with reference to FIG. 11, a high-speed data movement process by the information processing apparatus 1 according to the present embodiment will be described. FIG. 11 is a flowchart of the high-speed data movement process by the information processing apparatus according to the first embodiment. Herein, a case will be described in which data is moved from the logical address A to a logical address B. Further, in the case described below, the physical address P is associated with the logical address A.

The request arbitrating unit 13 receives a high-speed data movement request to move data from the logical address A to the logical address B (Step S301). The request arbitrating unit 13 notifies the table control unit 14 of the high-speed movement of the data from the logical address A to the logical address B.

The table control unit 14 reads an entry of the address translation table 18 by using the logical address A as an index (Step S302).

Then, the table control unit 14 determines whether a validity flag of the logical address A is "1" (Step S303). If the validity flag is "0" (Step S303: NO), the table control unit 14 notifies the request arbitrating unit 13 of an access error (Step S313). The request arbitrating unit 13 sends a notice of the access error to the CPU 3a or 3b serving as an issuing source of the high-speed data movement request.

On the contrary, if the validity flag is "1" (Step S303: YES), the table control unit 14 determines whether a transfer flag of the logical address A is "0" (Step S304). If the transfer flag is "1" (Step S304: NO), the table control unit 14 notifies the request arbitrating unit 13 of an access error (Step S313). The request arbitrating unit 13 sends a notice of the access error to the CPU 3a or 3b serving as the issuing source of the high-speed data movement request.

On the contrary, if the transfer flag is "0" (Step

S304: YES), the table control unit 14 acquires the physical address P that is a physical/transfer destination address associated with the logical address A (Step S305).

Then, the table control unit 14 sets the transfer flag of the logical address A in the address translation table 18 to "1" (Step S306).

Further, the table control unit 14 updates the physical/transfer destination address of the logical address A in the address translation table 18 with the logical address B (Step S307).

Subsequently, the table control unit 14 reads an entry of the address translation table 18 by using the logical address B as an index (Step S308).

The table control unit 14 sets the validity flag of the logical address B in the address translation table 18 to "1" (Step S309).

Further, the table control unit 14 resets the transfer flag of the logical address B in the address translation table 18 to "0" (Step S310).

Furthermore, the table control unit 14 updates the physical/transfer destination address of the logical address B in the address translation table 18 with the physical address P (Step S311).

Moreover, the table control unit 14 updates the management information table 19 (Step S312).

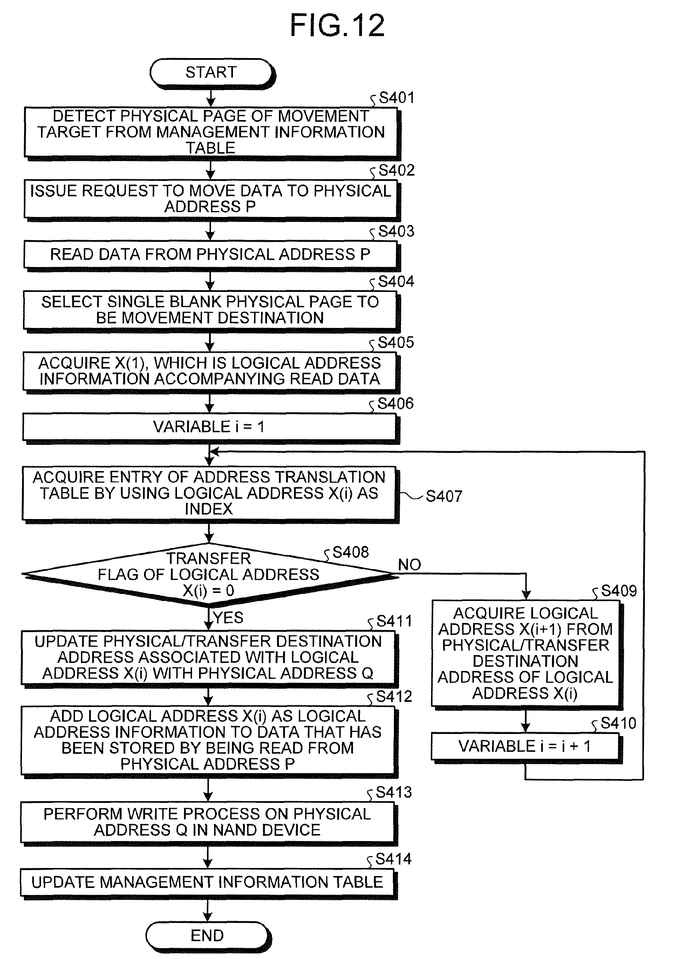

Next, with reference to FIG. 12, a reallocation process performed by the information processing apparatus 1 according to the present embodiment will be described. FIG. 12 is a flowchart of the reallocation process performed by the information processing apparatus according to the first embodiment. Herein, a case will be described in which data is moved from the physical address P to the physical address Q. Further, in the case described below, the physical address P is associated with the logical address A.

The movement target searching unit 16 detects, from the management information table 19, a physical page of a movement target (Step S401). The movement target searching unit 16 notifies the data movement control unit 17 of the physical address P indicating the detected physical page. The data movement control unit 17 notifies the request arbitrating unit 13 of data reallocation on the physical address P.

The request arbitrating unit 13 issues a request to move data at the physical address P to the device access control unit 15 (Step S402).

The device access control unit 15 reads data from the physical page indicated by the physical address P among pages provided in the NAND devices 7a to 10a, and sends the data to the request arbitrating unit 13. The request arbitrating unit 13 stores therein the data read from the physical address P (Step S403).

The request arbitrating unit 13 notifies the table control unit 14 of the data reallocation on the physical address P. The table control unit 14 selects a physical page indicated by the physical address Q as a blank page that serves as a movement destination (Step S404).

The request arbitrating unit 13 acquires a logical address X(1) that is logical address information accompanying the data read from the physical address P (Step S405). Then, the request arbitrating unit 13 sends the logical address X(1) to the table control unit 14.

The table control unit 14 sets a variable i such that i = 1 (Step S406).

Then, the table control unit 14 acquires an entry of the address translation table 18 by using the logical address X(i) as an index (Step S407). Herein, X(i) represents a logical address to be sequentially transferred until a logical address with the transfer destination flag of "0" is obtained.

Subsequently, the table control unit 14 determines whether a transfer flag of the logical address X(i) is "0" (Step S408). If the transfer flag is "1" (Step S408: NO), the table control unit 14 acquires a logical address X(i+1) from a physical/transfer destination address of the logical address X(i) (Step S409).

Thereafter, the table control unit 14 sets the variable i such that i = i + 1 (Step S410), and returns to Step S407.

On the contrary, if the transfer flag is "0" (Step S408: YES), the table control unit 14 updates the physical/transfer destination address associated with the logical address X(i) with the physical address Q (Step S411). Then, the table control unit 14 sends the logical address X(i) to the request arbitrating unit 13.

The request arbitrating unit 13 adds the logical address X(i) as logical address information to the data that has been stored by being read from the physical address P (Step S412).

The request arbitrating unit 13 issues a write request containing the physical address Q to the device access control unit 15. The device access control unit 15 performs a write process on the physical address Q among pages provided in the NAND devices 7a to 10a (Step S413).

Further, the table control unit 14 updates the management information table 19 (Step S414).

As described above, in the information processing apparatus according to the present embodiment, an address conversion table stores therein a transfer flag indicating whether an association relation has been changed, and if the association relation has been changed, stores therein a logical address of a transfer destination. Further, the information processing apparatus according to the present embodiment, when reallocating data, traces logical addresses of transfer destinations in order from a logical address indicated by logical address information that is the accompanying information on the data, and thereby specifies a currently-associated logical address. Therefore, it becomes possible to maintain the performance and the resource use efficiency and ensure the reliability of the system.

### [b] Second Embodiment

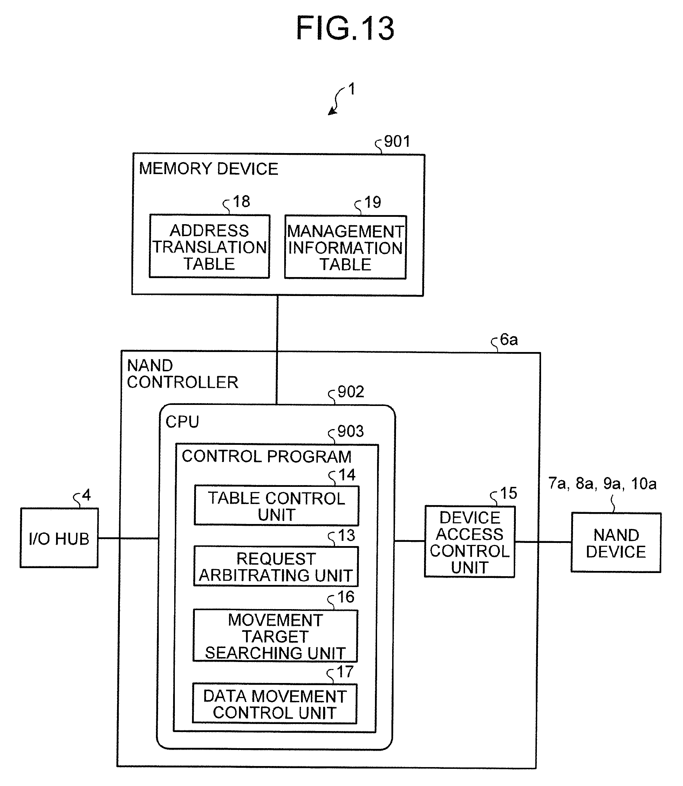

FIG. 13 is a block diagram of an information processing apparatus according to a second embodiment. In the first embodiment, an example has been described in which management of a movement destination address in a high-speed data movement is realized by hardware; however, this can be realized by software. Therefore, in the second embodiment, a case will be described in which management of a movement destination address in a high-speed data movement is realized by software.

The NAND controller 6a illustrated in FIG. 13 includes a CPU 902. Further, the information processing apparatus 1 includes a memory device 901 that is a main storage unit enabled to be accessed by the CPU 902.

The address translation table 18 and the management information table 19 are loaded on the memory device 901.

The respective functions of the request arbitrating unit 13, the table control unit 14, the movement target searching unit 16, and the data movement control unit 17 are implemented by the CPU 902.

That is, a control program 903 on the CPU 902 controls a search for a movement target, execution of data reallocation, reference and update of each table, arbitration of requests, and the like by using the address translation table 18 and the management information table 19 loaded on the memory device 901.

In this way, even when all of the functions are realized by software, the same control as the first embodiment is performed, so that the same advantageous effects can be obtained.

Incidentally, the NAND controller 6a may execute the control program 903 by using not the CPU but an arithmetic device, such as an MPU or an FPGA. Further, the above described control program 903 may be stored in, for example, the memory device 901 or the NAND devices 7a to 10a, or may be executed by the CPU 902 by other methods. For example, each program may be stored in a "portable physical medium", such as a flexible disk (FD), a compact disk (CD)-ROM, a digital versatile disk (DVD), a magnetooptical disk, or an IC card.

Then, the NAND controller 6a may acquire and execute each program from the portable physical medium via each of the CPUs 902. Furthermore, it may be possible to acquire and execute each program stored in other computers or server devices via a public line, the Internet, a local area network (LAN), a wide area network (WAN), or the like.

According to an embodiment of the information processing apparatus, the data transfer control method, and the data transfer control program disclosed in this specification, it becomes possible to maintain the performance and the resource use efficiency and ensure the reliability of the system.

## Claims

1. An information processing apparatus (1) comprising:
a data storage unit (7a) that manages stored data by a physical address;
a processing unit (3a) that outputs a command to process the data stored in the data storage unit (7a) by using a logical address associated with the physical address;
a relation storage unit (18) that stores therein an association relation between the logical address and the physical address, change information indicating a change in the association relation when the association relation is changed such that a physical address having been associated with each logical address is associated with a different logical address, and the different logical address; and
an address control unit (14) that, when receiving a command to move data between logical addresses from the processing unit (3a), changes the association relation in the relation storage unit (18) so as to associate a movement-destination logical address with a physical address in which the data is stored, sets the change information in a movement-source logical address, and stores the movement-destination logical address as the different logical address associated with the movement-source logical address.

2. The information processing apparatus (1) according to claim 1, further comprising:
a data movement control unit (17) that performs data movement to store data being stored in a specific physical address to a different physical address, wherein
the data storage unit (7a) stores and manages, at the physical address, data and information on a logical address associated with the physical address, and
the address control unit (14), when the data movement control unit (17) performs the data movement, specifies a logical address associated with the specific physical address in the relation storage unit (18) based on the change information, and changes the association relation such that the movement-destination logical address is associated with the specified logical address.

3. The information processing apparatus (1) according to claim 2, wherein
the address control unit (14) acquires, as a search target address, a logical address associated with the specific physical address from the data storage unit (7a), acquires, when the change information is set in the search target address, a movement-destination logical address associated with the search target address by referring to the relation storage unit (18), sequentially acquires movement-destination logical addresses associated with respective search target addresses by employing the acquired movement-destination logical address as a next search target address until detecting a search target address at which the change information is not set, and changes the association relation such that the different physical address is associated with the search target address at which the change information is not set.

4. The information processing apparatus (1) according to claim 3, wherein the data movement control unit (17), when performing the data movement, acquires a logical address associated with a movement-destination physical address from the address control unit (14), and stores the data and the acquired logical address in the different physical address in the data storage unit (7a).

5. The information processing apparatus according to any one of claims 1 to 4, wherein the address control unit (14) stores one of a physical address associated with each logical address and the movement-destination logical address in a same area in the relation storage unit (18) corresponding to each logical address.

6. A data transfer control method performed by a control unit that controls a storage device (7a), the data transfer control method comprising:
receiving a movement of data between logical addresses, the data being stored at a physical address in the storage device (7a) that manages stored data by the physical address;
changing, in relation information which contains an association relation between the logical address and the physical address, which contains change information indicating a change in the association relation when the association relation is changed such that a physical address having been associated with each logical address is associated with a different logical address, and which contains the different logical address, the association relation such that a movement-destination logical address is associated with the physical address at which the data to be moved is stored;
setting the change information in a movement-source logical address in the relation information; and
setting the movement-destination logical address as the different logical address associated with the movement-source logical address in the relation information.

7. A data transfer control program causing a computer to execute:
receiving a movement of data between logical addresses, the data being stored at a physical address in a storage device (7a) that manages stored data by the physical address;
changing, in relation information which contains an association relation between the logical address and the physical address, which contains change information indicating a change in the association relation when the association relation is changed such that a physical address having been associated with each logical address is associated with a different logical address, and which contains the different logical address, the association relation such that a movement-destination logical address is associated with the physical address at which the data to be moved is stored;
setting the change information in a movement-source logical address in the relation information; and
setting the movement-destination logical address as the different logical address associated with the movement-source logical address in the relation information.
